# EUROPEAN PATENT SPECIFICATION

(11) **EP 0 754 118 B1**
(45) Date of publication and mention of the grant of the patent: **08.09.1999**
(21) Application number: 95907002.0
(22) Date of filing: 31.01.1995
(51) Int. Cl.: B29C 53/42, B29C 53/82, B29C 63/42, B65C 9/18

(54) **METHOD AND APPARATUS FOR PRODUCING A SLEEVE LABEL AND CONTAINER WITH SUCH SLEEVE LABEL**
VERFAHREN UND VORRICHTUNG ZUM HERSTELLEN EINER ETIKETTHÜLSE UND BEHÄLTER MIT EINER SOLCHEN ETIKETTHÜLSE
PROCEDE ET DISPOSITIF DE FORMATION D'UNE ETIQUETTE MANCHON ET RECIPIENT DOTE D'UNE TELLE ETIQUETTE

(30) Priority: 06.04.1994 US 223614; 22.06.1994 EP 94109592; 16.12.1994 EP 94119927
(43) Date of publication of application: 22.01.1997
(73) Proprietor: GERRO PLAST GmbH, D-40625 Düsseldorf (DE)
(72) Inventor: KONTZ, Robert, F., Toledo, OH 43624 (US)
(74) Representative: Müller, Enno, Dipl.-Ing.
(86) International application number: EP9500331
(87) International publication number: WO9527613

(56) References cited:
- FR-A- 2 115 383
- FR-A- 2 291 908
- US-A- 3 677 845
- US-A- 3 767 496
- US-A- 3 970 492
- US-A- 3 984 005

## Description

The invention is concerned with a method for producing a sleeve label according to the preamble of claim 1, an apparatus for forming a heat-shrinkable sleeve label according to the preamble of claim 2 and a container with a sleeve label according to the preamble of claim 5.

Such method and apparatus as well as container is known for example from US-patent 3 767 496. Further, it is known from US-PS 3 984 005, to weld the overlap by heating the specific area of the sleeve by hot air. Such hot air can differ as to temperature. Moreover, there are difficulties to reach a high number of weldings during a given time which such technique.

A technical problem of the invention is to provide a method and an apparatus, and a container labeled,which improve the shortcomings of the historical process used to shrink-label containers. This is especially to provide higher processing speed and/or label application to a broader class of containers and/or significantly reducing the costs, complexity and maintainance requirements for the equipment.

This technical problem is first solved with the regard to the method by the invention as described in claim 1. This method is especially advantageous with respect to thin web material of for example 50g/m². Preferably, the pressing of the leading end of the sleeve against the heated element is performed from outside of the sleeve. However, it is also possible to move the heated element being located inside of the sleeve, into a pressing contact with the leading end of the sleeve. The pressing contact between the leading end and the heated element involves or leads further to a contact between the leading end and the tail end and thereby, due to the heat transfered by the heated element, to a welding between the leading end and the tail end. It is further prefered, that the overlap is moved, for performing the welding, against the heated element by a contact element or pressing element located outside of the sleeve. The method is performed such, that the pressing element and the heating element squeeze in the overlap for a very short time.

The invention is also concerned with a product, norally a container, having especially a sleeve label produced according to the method as described before. The sleeve on the container has nearly no freely moveable overlap on the outer side but freely moveable overlap on the inner side, such that the inside overlap keeps the sleeve in this region - before shrinking -in a certain distance to an outer surface of the container. It is of importance for the outer surface of the sleeve, that the welding is made from inside the sleeve, whereby inducing a very reduced harm to the outside of the sleeve compared with known sleeves. Also, it is of importance, that the seam has nearly no freely moveable overlap on the inner side of the sleeve.

A further aspect of the invention is an apparatus for producing a heat shrinkable sleeve label. It is of importance, that an overlap of the leading end and the tail end of the web on the mandrel is in the region of a gap and that the gap has a heat source having a temperature above a welding temperature of the web. This allows to press the overlap against the heat source or, alternatively, to move the heat source against the overlap for welding the end in the overlap together. The contact tic between the overlap, or, more specifically between the leading end and the heat source is preferably very short. For example, the contact time can be less than 1/10 of a second, preferably less than 5/100 of a second, for example 15/1.000 of a second. More specifically, the mandrel may have on both sides of the heat source suction ports, by which the leading end as well as the tail end of the web wrapped around the mandrel may be held. For example, over the circumference of the mandrel, there may be specifically three suction ports in one horizontal plane. These suction ports, may however, in vertical direction, extend in form of a nut. By two of the suction ports, the leading end may be held on both sides of the heat source, whereas by the third suction port the tail end may be held, in a region, where the tail end is not yet in overlap with the leading end. Alternatively, it is also possible, that one of the suction ports, the one who is located near to or at the edge of the leading end, may be such, that also the tail end is held by this same suction port. The heat source itself may be a tube, through which flows hot air. Further, the tube may have, at least on its side directed to the overlap, a teflon coating. The tube may be of copper. The pressing element or contact element may be in detail of different construction. First, it can be a roller, which may have a soft covering, for ale a rubber covering. Further, it can be a finger-like part, which is on its front part coming into cooperation with the overlap and pressing the overlap against the heat source made of a soft material like rubber or which is made completely of the soft material. Also the pressing element may consist of two spaced apart to each other finger-like parts (which may however have a vertical extension according to the vertical length of the overlap). The spacing tray be for example 1 mm, whereas the two spaced apart parts tray have each a whidth of 2mm.

Further, the invention is described with respect to the attached drawings, wherein shows:
- fig. 1: a schematic plan view of the machine;
- fig. 2: a representation according to fig. 1, in an alternative embodiment;
- fig. 3: a perspective detail view of the cutting station;
- fig. 4: a schematic side elevation of the machine on the side where the sleeves are put on the containers;
- fig. 5: a schematically cross-sectional view of a further embodiment of the mandrel with a web wrapped around;
- fig. 6: the mandrel according to fig. 5, whereby the overlap is pressed into contact with a heating element;
- fig. 7: schematically and in perspective view different forms of a pressing element; and
- fig. 8: a representation similar to fig. 9, with a label sleeve according to fig. 11 or 12.

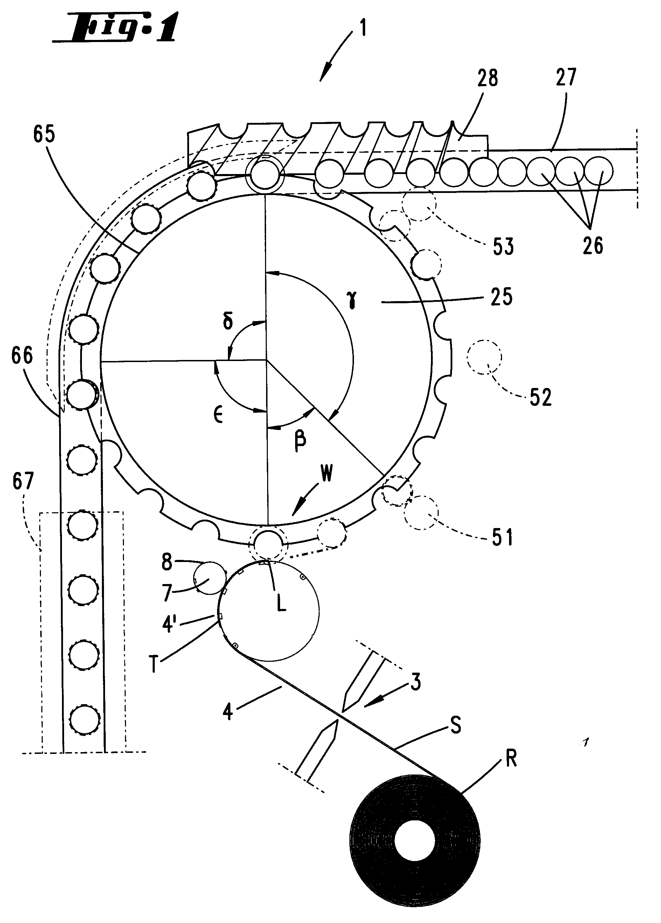

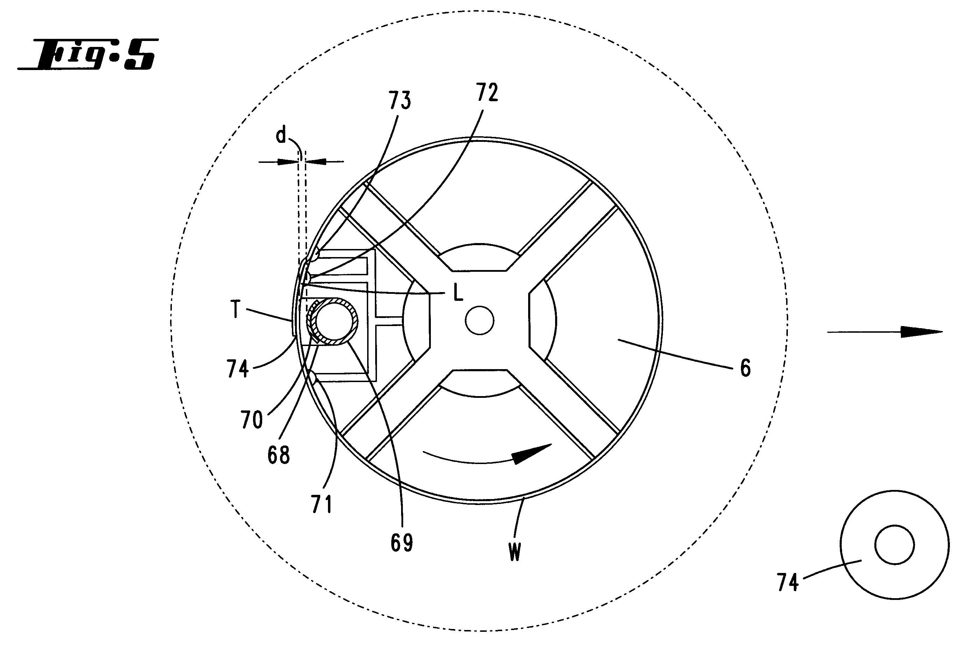

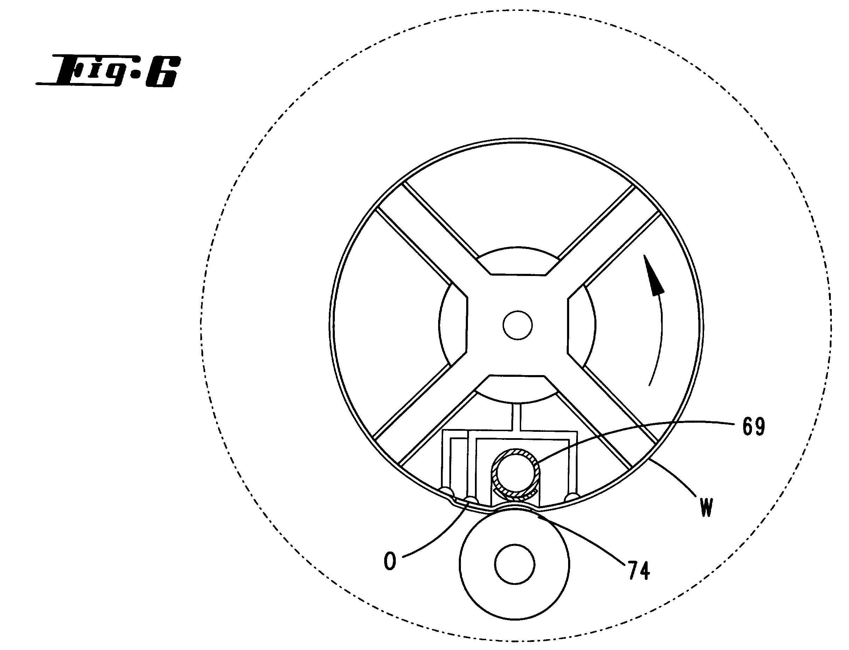

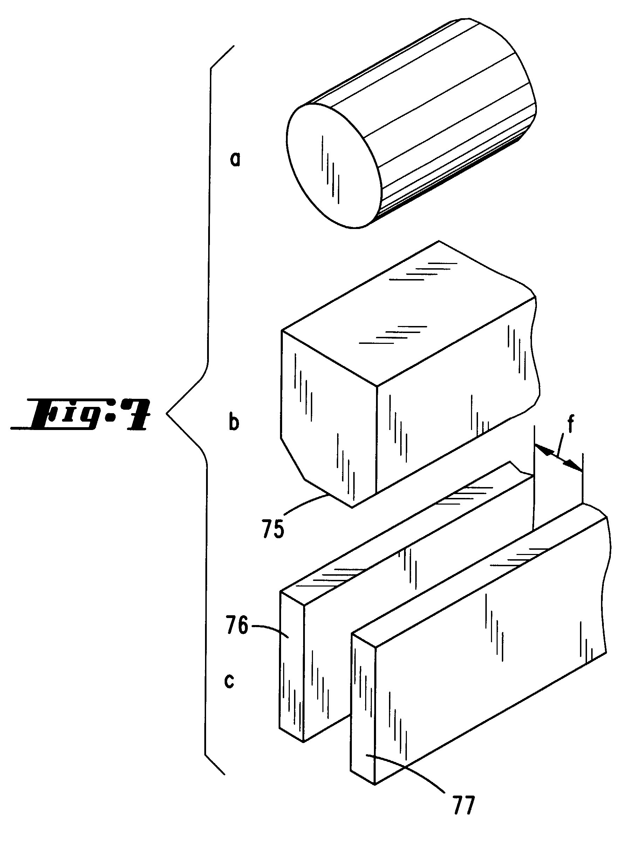

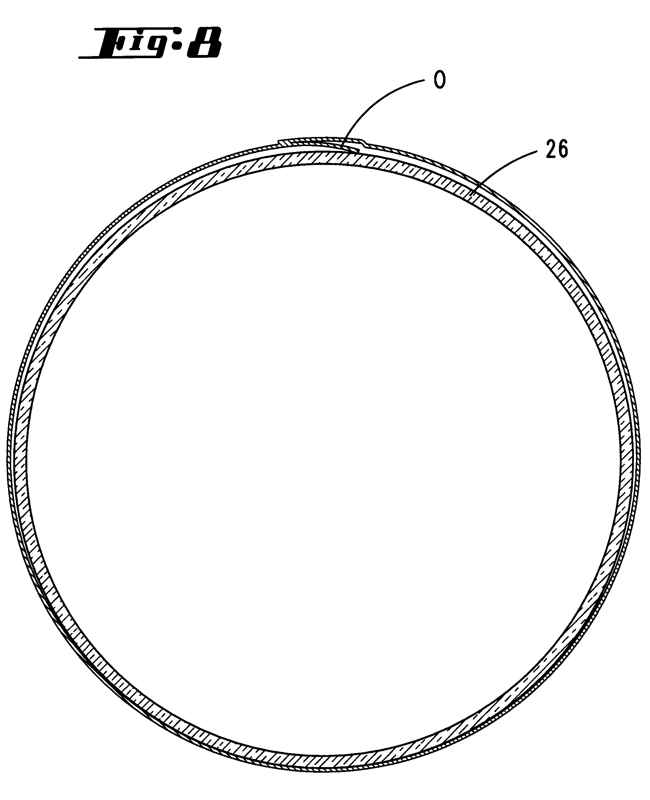

Represented and described is, first with respect to fig. 1, a machine 1 for producing a label sleeve 2 (see for example fig. 7 and 9) of a heat shrinkable material, especially a foamed plastic material. The plastic material used is a polyolefin or copolymer of olefins, for example polyethylene or laminates or extrusion of polyolefins, e.g. a polyethylene foam layer and an ethylene acrylate film or a polystyrene foam with a polyolefin or polystyrene blend coextruded or lamitated layer. The process is also useful with non-foamed film laminates and coextrusion of polystyrene polyolefin blends in a single or multiple layers.

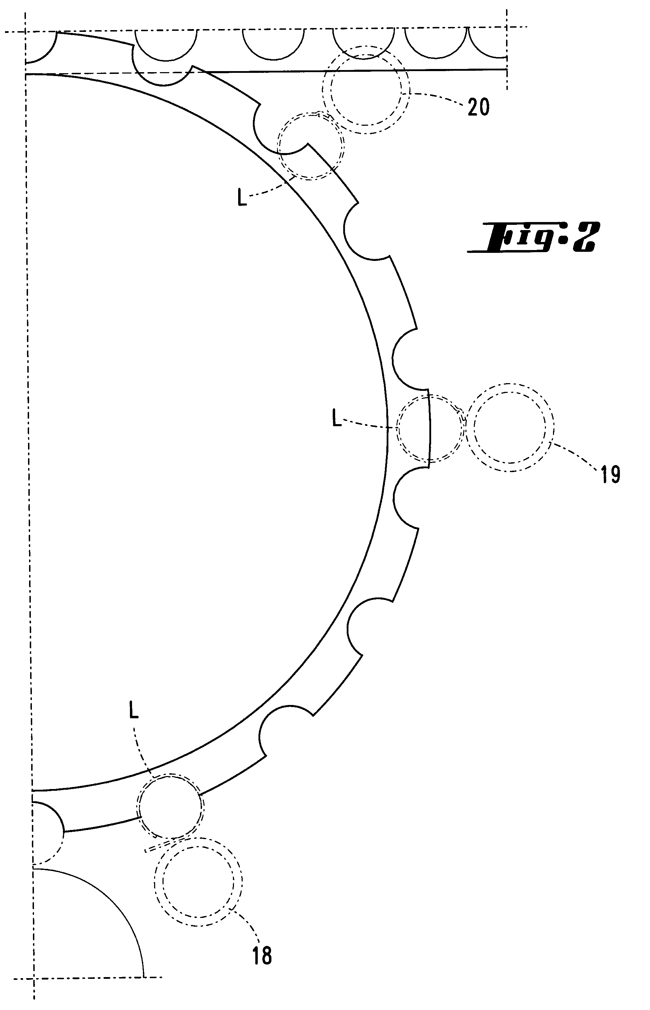

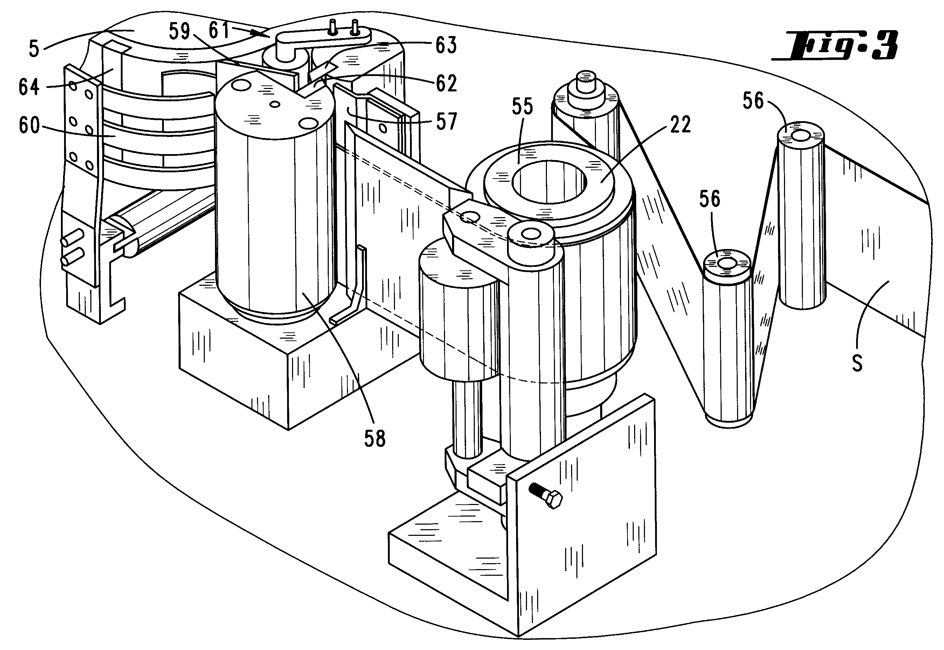

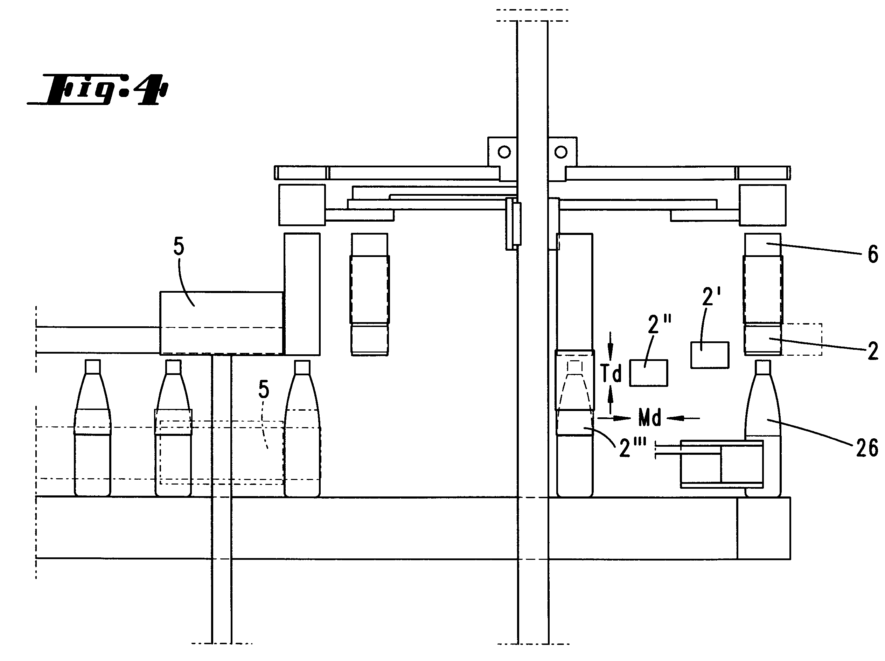

The plastic materials is made in sheet or web form that is highly orientated in the longitudinal dimension (Md direction) of the web which is to become the circumference of the sleeve. There may be some orientation in the cross dimension (Td direction) of the web; however, this should be minimal in relation to the longitudinal direction Md because this Td direction is ultimately the height dimension of the sleeve and it is desirable to control the top margin of the sleeve level at a straight line along the container. (see f.e. fig. 4)

Examples of plastic sheet traterials that may be run in a web are foamed polystyrene or polyethylene coextrusion or laminates on the order of 0.006 to 0.020 inches thickness (0.006 x 2.54 cm to 0.02 x 2.54 cm) and highly oriented in the running (Md) direction of the web. Md direction orientation for shrinkage should be at least 30% and on the order of 60-80% is preferable. The cross (Td) direction orientation should be less than 15% and in the range of 0-15%.

The plastic is preferably in form of a foam sheet with a foam/film coextrusion or film laminate to reduce materials cost at the same strength, but the principles of the invention will also work with non-foam plastic materials or solid sheets of properly manufactured plastics.

There is first an unwinding roll R of label material. The label material is delivered in form of a sheet S to a cutting station 3, which is in fig. 1 only schematically depicted. The cutting station 3 is shown in more detail in fig. 3. The sheet S is advanced toward the rotatable vacuum drum 5 by a driver feed roll 55 past a web guide 56 and a stationary directing bar 57 which is parallel to and adjacent to the outer periphery of a rotating member 58. The sheet S is guided by the action of the directing bar 57 and a primary feed guide 59 on the outer side of the passing sheet S toward the vacuum drum 5 and a final guide 60 guides the leading end of the cut web W into contact with the rotating vacuum drum 5. Individual webs W are formed at a severing station indicated generally by reference number 61, by means of a knife 62 which is mounted on the periphery of the rotating member 58 and which shears the sheet S into a succession of webs W by virtue of the periodic engagement of the knife 62 with feed knife 63. The leading end of the web W emerging from the severing station 61 is engaged by vacuum in the rotatable vacuum drum 5 which is applied to the web W through vacuum post 64. A flexible plastic web W such as a web formed from a polystyrene foam/film laminate or coextrusion, is partly wrapped around a portion of the periphery of the rotatable vacuum drum 5.

After the sheet 2 has been cut in webs 4, 4', the web 4 is first adhered to a vacuum drum 5, which is rotatable about its vertical axis. The vacuum drum 5 is further in nearly tangential relationship with a mandrel 6 at a wrap station W.

In fig. 5 a schematic cross-sectional view of a mandrel is shown, around which the web W is wrapped such, that a tail end T is in an overlap to a leading end L. The mandrel 6 has a vertically extending U-shaped groove 68, in which is located a tube 69, also extending vertically. The tube 69 may be of copper and having a teflon coating 70 on its side facing radially outward, to the open side of the groove 68. The temperature of the heated element tray be in the region of 140-200°C. However, the temperature of the heated element, the contact time and the contact pressure are to adjust according to the specific needs. These will be mainly due to the thickness and the properties of the web material. Further the groove 68 is of such depth, that the outer surface of the tube or the coating respectively is located for a distance d beneath an outer circumferential surface of the mandrel.

Further, there are suction ports 71, 72 and 73 for fastening the web with the ends in overlapping relation on the mandrel. Whereas the suction port 72 is located on the one - circumferential - side of the tube 69, the two other suction ports 72 and 73 are located on the other - circumferential - side of the tube 69.

The leading end L bridging the open side of the groove 68 is held by the two suction ports 71 and 72. The tail end, which extends not over the full width of the groove 68, is only held by the suction port 73.

Further, on the apparatus is arranged a pressing element 74, which is on the embodiment shown trade of a resilient cylindrical form. Due to the rotating movement of the mandrel 6, first around its own axis and second with respect to the turret, the pressing element 74 comes into contact with the mandrel 6 or the web wrapped around the mandrel 6 respectively. This contact is shown in fig. 6. One can see, that the pressing element 74, due to its resilient property, presses the overlap against the hot surface of the heating element 69, thereby welding the leading end to the tail end from inside of the sleeve. Due to the specific welding technic and the location of the tail end relative to the groove 68, the seam created is very specific. Specifically the very edge 74 of the tail end is located in the region, where as shown in fig. 6, the welding is performed. Viewed from the outside of the sleeve, therefore, the seam so created is very uniform and nearly no freely moveable overlap remains on the outer side. On the other hand, a certain overlap O, which is freely moveable, remains on the inside of the sleeve.

Further, in fig. 7, schematically some of the possible configurations of the pressing element 74 are shown. Whereas fig. 7a represents also a cylindrical configuration, as in principle already shown in fig. 5, fig. 7b shows a finger-like element, which is slightly reduced on its forward side. The tip 75 may press the overlap into the groove 68. The element according to fig. 7b may be arranged such, that it comes into a meshing relation with the mandrel, thereby going into the groove 68 to a certain extent. Nearly the same can be performed with the configuration according to fig. 7c. With the two spaced apart pressing elements 76, 77, a double seam can be trade. Two vertically, very near to each other extending welding lines can be performed. Therefore, a distance f between the two elements 76 and 77 can be very short, for example about 1 mm. The elements according to fig. 7b and fig. 7c can be of aluminium for example.

Fig. 8 shows the sleeve created as before described on a container 26. It is shown, that the inside overlap O keeps the sleeve in this region - before shrinking - in a certain distance to the outer surface of the container 26. On the other hand, the overlap O is of advantage with respect to an adjustion of the sleeve on a container, especially with a non-cylindrical surface, for example of conical outer shape. To a certain extent, this kind of sleeve may lead to a comparable result as a sleeve with creases.However, a sleeve as produced according to fig. 5-7 may be also combined with creases.

## Claims

1. Method for producing a sleeve label (2) of a label material, preferably shrinkable plastic material, comprising wrapping a web (4) of the material having a leading end (L) and a tail end (T) around the mandrel (6), with the ends (L, T) in an overlapping relation, and producing a contact between the overlap and a heated element, whereby the contact is made by means of a pressing element located outside of the sleeve and by pressing the heated element against the ends of the sleeve characterized by making use of a heat source in form of a tube through which hot air is flowing and whereby the contact is between the overlap and a hot surface of the tube.

2. Apparatus for forming a heat shrinkable sleeve label of plastic material, comprising a mandrel (6) for forming the sleeve (2) by wrapping a web having a leading end (L) and a tail end (T) around the mandrel (6), with the leading end and the tail end in overlapping relation, whereby further a pressing element is provided located outside of the sleeve and a heated element for contacting the overlap, characterized in that the heated element is a tube-like element, heated by hot air flowing through the tube.

3. Apparatus according to claim 2, characterized in that the heated element has a non-sticky surface.

4. Apparatus according to claim 3, characterized in that the heated element has a teflon surface (70).

5. A container with a label sleeve (2), produced especially according to claim 1 or by an apparatus according to one or more of the claims 2-4 with nearly no freely moveable overlap on the outer side but freely moveable overlap on the inner side, such that the inside overlap keeps the sleeve in this region - before shrinking - in a certain distance to a outer surface of the container.

6. Container according to claim 24, the sleeve having a seam made by welding the leading end to the tail end, whereby the welding is performed from inside the sleeve.

7. Container according to one of the claims 24 and 25, wherein the sleeve (2) has at least at an upper or lower circumferential region vertical stiffening creases (C) or remaining formations thereof.

## Patentansprüche

1. Verfahren zur Herstellung einer Etikettenhülse aus einem Etikettenmaterial, vorzugsweise schrumpffähigem Kunststoffmaterial, aufweisend die Schritte, ein Materialband, das ein vorderes Ende und ein rückwärtiges Ende aufweist, um einen Dorn zu wickeln, mit den Enden in einer Überlappungsbeziehung, und Herstellen eines Kontaktes zwischen der Überlappung und einem geheizten Element, wobei der Kontakt mit Hilfe eines Preßelementes hergestellt ist, das außerhalb der Hülse angeordnet ist, und durch Pressen des geheizten Elementes gegen die Enden der Hülse, dadurch gekennzeichnet, daß von einer Wärmequelle in Form einer Röhre Gebrauch gemacht wird, durch welche Heißluft strömt, und wobei der Kontakt zwischen der Überlappung und einer heil Oberfläche der Röhre gegeben ist.

2. Vorrichtung zur Ausbildung einer wärmeschrumpfbaren Etikettenhülse aus Kunststoffmaterial, aufweisend einen Dorn (6) zur Bildung der Hülse (2) durch Wickeln eines Bandes, das ein vorderes Ende und ein rückwärtiges Ende aufweist, um den Dorn (6), mit dem vorderen Ende und dem rückwärtigen Ende in überlappender Beziehung, wobei weiter ein Preßelement vorgesehen ist, angeordnet außerhalb der Hülse, und ein erhitztes Element, um mit der Überlappung in Kontakt zu kommen, gekennzeichnet dadurch, daß das erhitzte Element ein röhrenartiges Element ist, erhitzt durch Heißluft, welche durch die Röhre strömt.

3. Vorrichtung nach Anspruch 2, dadurch gekennzeichnet, daß das erhitzte Element eine nicht haftende Oberfläche aufweist.

4. Vorrichtung nach Anspruch 3, dadurch gekennzeichnet, daß das erhitzte Element eine Teflon-Oberfläche aufweist.

5. Behälter mit einer Etikettenhülse, hergestellt insbesondere nach Anspruch 1 oder mittels einer Vorrichtung nach einem oder mehreren der Ansprüche 2-4, mit nahezu keinem freibeweglichen Überlappungsabschnitt an der Außenseite, jedoch einem frei beweglichen Überlappungsabschnitt an der Innenseite, derart, daß der innenseitige Überlappungsabschnitt die Hülse in diesem Bereich - vor dem Schrumpfen - in einem gewissen Abstand zu einer äußeren Oberfläche des Behälters hält.

6. Behälter nach Anspruch 5, wobei die Hülse eine Naht aufweist, die durch Schweißen des vorderen Endes an das rückrärtige Ende erhalten ist, wobei die Schweißung von der Innenseite der Hülse aus durchgeführt ist.

7. Behälter nach Anspruch 5 oder 6, wobei die Hülse zumindest an einem oberen oder unteren Umfangsbereich vertikale Versteifungsfalten oder verbleibende Ausformungen hiervon aufweist.

## Revendications

1. Procédé pour fabriquer une étiquette manchon (2) à partir d'un matériau pour étiquette, de préférence de la matière plastique rétrécissable, comprenant les étapes consistant à enrouler une bande (4) du matériau présentant une extrémité de tête (L) et une extrémité de queue (T) autour du mandrin (6), avec les extrémités (L, T) en relation de recouvrement, et à provoquer un contact entre le recouvrement et un élément chauffé, de telle manière que le contact soit réalisé au moyen d'un élément de pressage situé à l'extérieur du manchon et en pressant l'élément chauffé contre les extrémités du manchon, caractérisé en ce que l'on utilise une source de chaleur sous la forme d'un tube à travers lequel s'écoule de l'air chaud et de telle manière que le contact se produise entre le recouvrement et une surface chaude du tube.

2. Dispositif pour former une étiquette manchon en matière plastique rétrécissable à la chaleur, comprenant un mandrin (6) pour former le manchon (2) en enroulant une bande présentant une extrémité de tête (L) et une extrémité de queue (T) autour du mandrin (6), avec l'extrémité de tête et l'extrémité de queue en relation de recouvrement, en outre un élément de pressage étant prévu disposé à l'extérieur du manchon et un élément chauffé pour venir en contact avec le recouvrement, caractérisé en ce que l'élément chauffé est un élément en forme de tube, chauffé par l'air chaud s'écoulant à travers le tube.

3. Dispositif selon la revendication 2, caractérisé en ce que l'élément chauffé présente une surface non collante.

4. Dispositif selon la revendication 3, caractérisé en ce que l'élément chauffé comporte une surface en téflon (70).

5. Un récipient avec un manchon d'étiquette (3) fabriqué spécialement selon la revendication 1 ou par un dispositif selon l'une ou plusieurs des revendications 2 à 4, avec presque pas de recouvrement librement mobile sur la face extérieure mais un recouvrement librement mobile sur la face intérieure, de telle façon que le recouvrement intérieur maintienne le manchon dans cette région - avant le rétrécissement - à une certaine distance d'une surface extérieure du récipient.

6. Récipient selon la revendication 5, le manchon comportant un scellement réalisé en soudant l'extrémité de tête à l'extrémité de queue, de telle manière que la soudure soit réalisée de l'intérieur du manchon.

7. Récipient selon l'une des revendications 5 ou 6, dans lequel le manchon (2) comporte, au moins dans une région circonférentielle supérieure ou inférieure, des plis ou fronces verticaux de raidissement (C) ou des formations restantes de ces plis ou fronces.
